(19) Europäisches Patentamt
European Patent Office
Office européen des brevets

(11) **EP 2 824 650 A1**

(12) **EUROPEAN PATENT APPLICATION**

(43) Date of publication:
**14.01.2015 Bulletin 2015/03**

(51) Int Cl.:
***G09B 19/00*** *(2006.01)* ***A63B 69/36*** *(2006.01)*

(21) Application number: **14172934.3**

(22) Date of filing: **18.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.06.2013 JP 2013130653**
**21.06.2013 JP 2013130655**

(71) Applicant: **Seiko Epson Corporation**
**Tokyo 163 (JP)**

(72) Inventors:
• **Sato, Masafumi**
**Nagano, 392-8502 (JP)**
• **Shibuya, Kazuhiro**
**Nagano, 392-8502 (JP)**
• **Kodaira, Kenya**
**Nagano, 392-8502 (JP)**
• **Nomura, Kazuo**
**Nagano, 392-8502 (JP)**

(74) Representative: **Hoffmann Eitle**
**Patent- und Rechtsanwälte PartmbB**
**Arabellastraße 30**
**81925 München (DE)**

(54) **Motion analysis device**

(57)     In a motion analysis device, a first detection section detects a first state of a shaft portion of sporting equipment using an output of an inertial sensor. The first state corresponds to, for example, a resting state. A second detection section detects a second state of the shaft portion of the sporting equipment using the output of the inertial sensor. The second state corresponds to, for example, an impact. The second detection section detects a relative rotational angle of the shaft portion having varied around an axis of the shaft portion from the first state.

FIG. 1

## Description

BACKGROUND

1. Technical Field

The present invention relates to a motion analysis device.

2. Related Art

A motion analysis device is used for an analysis of a motion such as a swing action. When making a swing, sporting equipment is swung. When swinging the sporting equipment, a grip of the sporting equipment is held by hand. When the sporting equipment is swung, the posture of the sporting equipment varies in accordance with the time axis. An inertial sensor is mounted on the sporting equipment. The swing action is visually reproduced based on an output of the inertial sensor. As a specific example of such a motion analysis device, there can be cited, for example, a golf swing analysis device as disclosed in JP-A-2008-73210.

For example, golf swing starts with address, and then reaches the follow-through and then finish via a take-back action, a halfway back position, downswing from a top position, and an impact. At the beginning of the golf swing, at address a test subject preliminarily determines the posture of the golf club at impact. As a result, the orientation of the face of the club head is determined. If the orientation of the face at address is reproduced at impact without fail, the hit ball flies as expected. However, in reality, it is very difficult to establish the orientation of the face at impact substantially the same as at address as expected. Therefore, it has been becoming necessary to indicate the comparison in relative rotational angle of the shaft portion of the golf club and orientation of the face angle of the club head between address and impact to the test subject. By using an optical motion capture system equipped with a plurality of cameras, it is possible to shoot the face angle of the hitting area of the golf club at address and at impact to identify the orientation of the face angle from the images, which lacks convenience on the grounds that the system is large in scale, and it is difficult to install the system in an outdoor location.

Further, for example, in golf, the direction of the hit ball is significantly affected by the orientation of the face at the moment of the impact. As known to the art, if it is attempted to adjust the face of the club head by rolling the wrist immediately before the impact, the adjustment is delayed, and the face at impact is rather disturbed by rolling the wrist, which negatively affects the swing. The motion of the wrist in the golf swing is difficult to observe by the optical motion capture using the cameras and so on, and it is unachievable to trace such a precise movement as the delicate roll of the wrist. In the case of making a precise tracing, it is necessary to prepare a lot of high-precision cameras, which makes the measurement system large in scale. Further, the optical motion capture using the cameras and so on can only be used in the indoor measurement, but cannot be used in the field of the typical outdoor practice.

SUMMARY

An advantage of some aspects of the invention is to provide a motion analysis device capable of easily presenting the rotation of the shaft portion of the sporting equipment as a measure in the motion analysis, and a motion analysis device capable of easily presenting the motion of the wrist in connection with the swing action in a visual manner.

(1) An aspect of the invention relates to a motion analysis device including a first detection section adapted to detect a first state of a shaft portion of sporting equipment using an output of an inertial sensor, and a second detection section adapted to detect a second state of the shaft portion of the sporting equipment using the output of the inertial sensor to detect a relative rotational angle of the shaft portion having varied around an axis of the shaft portion from the first state.

The sporting equipment is held by hand. When making a swing, the sporting equipment is swung. When the sporting equipment is swung, the posture of the sporting equipment varies in accordance with the time axis. At the beginning of the swing, the test subject preliminarily determines the posture of the sporting equipment at the impact. The swing action including the impact is newly executed from here. In the aspect of the invention, the relative rotational angle around the axis of the shaft portion of the sporting equipment between the position at address and the certain positional state in the swing, the relative rotational angle between the first state and the second state in the swing, and so on are detected. By visually displaying the relative rotational angle on the screen of the display device based on the image data, the rotation around the axis of the shaft portion of the sporting equipment can be presented to the test subject. It is known that such a rotation of the shaft portion of the sporting equipment affects the direction of the hit ball after the impact. The test subject can improve the form of the swing in accordance with the rotation of the shaft portion thus presented. Further, since the rotational angle around the axis of the shaft portion of the sporting equipment can be measured only by mounting the inertial sensor on the sporting equipment, there can be obtained an advantage that the measurement can easily be performed and an advantage that the device can be used at any place since the device can also be used outdoors compared to the optical motion capture system using a plurality of cameras.

(2) The first state can be a resting state before starting a swing action, and the second state can be an acting state after starting the swing action. During the swing action, the relative rotational angle between the position at address and a certain position in the swing is detected around the axis of the shaft portion of the sporting equipment. By visually displaying the relative rotational angle on the screen of the display device based on the image data, the rotation around the axis of the shaft portion of the sporting equipment can be presented to the test subject. It is known that such a rotation of the shaft portion of the sporting equipment affects the direction of the hit ball after the impact. The test subject can improve the form of the swing in accordance with the rotation of the shaft portion thus presented.

(3) The first detection section may identify an orientation of a hitting area of the sporting equipment in the first state, and the second detection section may identify the orientation of the hitting area of the sporting equipment in the second state. It is also possible to identify the orientation of the hitting area of the sporting equipment based on the variation in rotational angle around the axis of the shaft portion. For example, in the case of the golf club, it is possible to identify the orientation of the face angle of the club head. The test subject can improve the form of the swing in accordance with the orientation of the face angle of the club head thus presented.

(4) The motion analysis device may be provided with a first display section adapted to display the relative rotational angle. For example, by displaying the relative rotational angle around the axis of the shaft portion of the sporting equipment between the position at address and the position at impact, it is possible to allow the test subject to make use of the device as a tool for prompting the improvement in the skill.

(5) The first display section may display a variation in the relative rotational angle in accordance with time in a swing action of the sporting equipment. According to such a display device, since the variation in the relative rotational angle is visually presented in accordance with the time in the swing action, the test subject can intuitively recognize the degree of the variation and the speed of the variation. It is possible for the test subject to improve the form of the swing in accordance with such a recognition.

(6) The first display section may additionally display comparative data of the variation in the relative rotational angle. According to such a display device, for example, in the case of the golf swing, the swing action of the test subject and the swing action of a professional or the swing action of another test subject having the same skill as the test subject can be displayed in a comparative manner. It is possible for the test subject to improve the form of the swing in accordance with the comparison.

(7) The motion analysis device may be provided with an event detection section adapted to identify an event in a swing action using the output of the inertial sensor, and an arithmetic section adapted to associate the relative rotational angle with the event. During the swing action, there occur several events such as the impact, backswing, the top position, or downswing. By identifying the relative rotational angle for each of such events, the test subject can easily improve the form of the swing.

(8) The motion analysis device may be provided with a second display section adapted to display the relative rotational angle together with a description of the event. According to such a display device, since the relative rotational angle is visually presented for each of the events of the swing, the test subject can intuitively recognize the relationship between the relative rotational angles and the events. It is possible for the test subject to improve the form of the swing based on such a recognition.

(9) The second display section may additionally display comparative data of the relative rotational angle for each of the events. According to such a display device, the swing action of the test subject and the swing action of a professional or the swing action of a person having the same skill as the test subject can be displayed in a comparative manner. In such a manner as described above, the relative rotational angle of the test subject can be compared with the relative rotational angle of a professional event by event. It is possible for the test subject to improve the form of the swing in accordance with the comparison.

(10) Another aspect of the invention relates to a motion analysis device including a first calculation section adapted to calculate a moving locus of sporting equipment in a swing using an output of an inertial sensor, and a second calculation section adapted to calculate a rotational angle generated around an axis of a shaft portion of the sporting equipment using the output of the inertial sensor, and the rotational angle obtained by the second calculation section is associated with the moving locus of the sporting equipment obtained by the first calculation section.

When making a swing, the sporting equipment is swung. When the sporting equipment is swung, the posture of the sporting equipment varies in accordance with the time axis. The variation in the posture is detected by the inertial sensor. In such a manner as described above, the moving locus of the sporting equipment is identified in accordance with the time axis. The swing action is visually presented on the screen. On this occasion, the motion of the wrist is detected by the inertial sensor at the same time. In such a manner as described above, the motion of the wrist is visually presented in association with the swing action. It is possible for the test subject to improve the form of the swing in accordance with such a motion of the wrist. Since the subtle motion of the roll of the wrist can be traced without using a large-scale device, and it is only required to attach the inertial sensor to, for example, the sporting equipment such as a golf club or a hand of the test subject, the measurement can easily be performed even outdoors compared to the optical motion capture system using cameras and so on.

(11) In the motion analysis device, a calculation result of the second calculation section may be synchronized with a calculation result of the first calculation section. By synchronizing the moving locus of the sporting equipment calculated by the first calculation section and the rotational angle generated around the axis of the shaft portion of the sporting equipment calculated by the second calculation section with each other, the timing of the roll of the wrist in the swing and the variation in the angle of the hitting area can more accurately be measured.

(12) The motion analysis device may be provided with a third display section adapted to display data having the rotational angle obtained by the second calculation section associated with the moving locus of the sporting equipment obtained by the first calculation section. According to the third display section, it is possible to display the timing of the roll of the wrist in the swing and the variation in the angle of the hitting area to the test subject as a measure for proficiency in the sport.

(13) The third display section may display a marking together with the moving locus of the sporting equipment, and the marking may change an orientation in accordance with a variation in the rotational angle generated around the axis of the shaft portion of the sporting equipment calculated by the second calculation section. Since the shaft of the sporting equipment has a rod-like shape, there is a problem that even if the rotation around the axis of the shaft is displayed, it is difficult for the teat subject to figure out the amount of the rotation. Therefore, by displaying the marking representing the variation in the rotational angle generated around the axis of the shaft portion of the sporting equipment together with the moving locus of the sporting equipment using the third display section, it is possible to display the state of the roll of the wrist and the variation in the angle of the hitting area so as to easily be understood by the test subject.

(14) The marking may be provided with a plane adapted to change an orientation in accordance with a movement of a hitting area of the sporting equipment. The rotation of the grip, namely the rotation of the wrist, is expressed by the rotation of the plane. In such a manner as described above, the test subject can clearly understand the rotation of the wrist from the image. It is possible for the test subject to improve the form of the swing in accordance with such understanding.

(15) The marking may be displayed as a three-dimensional shape. As a result, the test subject can clearly recognize ideally the motion of the wrist.

(16) The third display section may display a plane rotating around an axis of the shaft portion of the sporting equipment on the moving locus of the sporting equipment. In such a manner as described above, the rotation of the wrist can be expressed by the sporting equipment itself. The test subject can visually confirm the motion of the sporting equipment. It is possible for the test subject to improve the form of the swing over such confirmation.

(17) The inertial sensor may be provided with a detection axis parallel to the axis of the shaft portion of the sporting equipment, and can detect an angular velocity generated around the detection axis. If one of the detection axes of the inertial sensor is adjusted to the axis of the grip in such a manner as described above, the calculation process can be simplified when detecting the rotational angle around the axis.

(18) Still another aspect of the invention relates to a motion analysis device including a unit configured to calculate a moving locus of sporting equipment in a swing using an output of an inertial sensor, and a unit configured to calculate a rotational angle generated around an axis of a shaft portion of the sporting equipment using the output of the inertial sensor, wherein the rotational angle is associated with the moving locus of the sporting equipment.

BRIEF DESCRIPTION OF THE DRAWINGS

The invention will be described with reference to the accompanying drawings, wherein like numbers reference like elements.

Fig. 1 is a conceptual diagram schematically showing a configuration of a golf swing analysis device according to an embodiment of the invention.
Fig. 2 is a conceptual diagram schematically showing a relationship between a motion analysis model, and a golfer and a golf club.
Fig. 3 is a block diagram schematically showing a configuration of an arithmetic processing circuit according to a first embodiment of the invention.
Fig. 4 is a diagram showing a specific example of an image for visually expressing a moving locus of the golf club.
Fig. 5 is a specific example of a graph showing a variation in relative rotational angle in accordance with the time axis.
Fig. 6 is a specific example of a pseudo-pie chart for associating events with the relative rotational angles.

Fig. 7 is another specific example of the pseudo-pie chart for associating the events with the relative rotational angles.

Fig. 8 is a block diagram schematically showing a configuration of an arithmetic processing circuit according to a second embodiment of the invention.

Fig. 9 is a diagram showing a specific example of the image for visually expressing the moving locus of the golf club.

Fig. 10 is a diagram showing a specific example of the image for visually expressing the moving locus of the golf club.

DESCRIPTION OF EXEMPLARY EMBODIMENTS

Hereinafter, some embodiments of the invention will be explained with reference to the accompanying drawings. It should be noted that the embodiments explained below do not unreasonably limit the content of the invention as set forth in the appended claims, and all of the constituents set forth in the embodiments are not necessarily essential as means for solving the problem according to the invention.

1. Configuration of Golf Swing Analysis Device

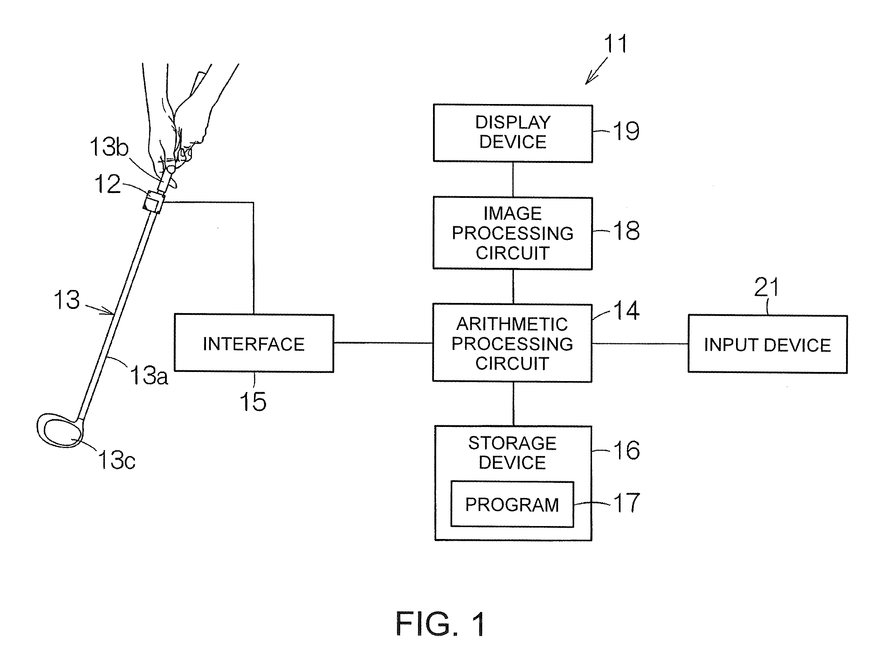

Fig. 1 schematically shows a configuration of a golf swing analysis device (a motion analysis device) 11 according to an embodiment of the invention. The golf swing analysis device 11 is provided with, for example, an inertial sensor 12. The inertial sensor 12 incorporates, for example, an acceleration sensor and a gyro sensor. The acceleration sensor is capable of separately detecting accelerations in three-axis directions perpendicular to each other. The gyro sensor is capable of individually detecting angular velocities around the three axes perpendicular to each other. The inertial sensor 12 outputs a detection signal. The detection signal identifies the acceleration and the angular velocity for each of the axes. The acceleration sensor and the gyro sensor detect the information of the acceleration and the angular velocity with relative accuracy.

The inertial sensor 12 is attached to a golf club (sporting equipment) 13. The golf club 13 is provided with a shaft 13a and a grip 13b. The grip 13b is held by hand. The grip 13b is formed coaxially with the axis of the shaft 13a. A club head 13c is connected to the tip of the shaft 13a. It is desirable that the inertial sensor 12 is attached to the shaft 13a or the grip 13b of the golf club 13. It is sufficient for the inertial sensor 12 to be fixed to the golf club 13 so as to be unable to move relatively to the golf club 13. Here, when attaching the inertial sensor 12, one of the detection axes of the inertial sensor 12 is adjusted to the axis of the shaft 13a. It is desirable that another of the detection axes of the inertial sensor 12 is adjusted to the orientation of the face of the club head 13c.

The golf swing analysis device 11 is provided with an arithmetic processing circuit 14. The inertial sensor 12 is connected to the arithmetic processing circuit 14. In the connection, a predetermined interface circuit 15 is connected to the arithmetic processing circuit 14. The interface circuit 15 can be connected to the inertial sensor 12 with wire, or can also be connected wirelessly to the inertial sensor 12. The arithmetic processing circuit 14 is supplied with the detection signal from the inertial sensor 12.

A storage device 16 is connected to the arithmetic processing circuit 14. The storage device 16 can store, for example, a golf swing analysis software program (a motion analysis program) 17 and related data. The arithmetic processing circuit 14 executes the golf swing analysis software program 17 to realize a golf swing analysis method. The storage device 16 can include a dynamic random access memory (DRAM), a mass-storage unit, a nonvolatile memory, and so on. For example, the DRAM temporarily holds the golf swing analysis software program 17 when performing the golf swing analysis method. The mass-storage unit such as a hard disk drive (HDD) stores the golf swing analysis software program 17 and the data. The nonvolatile memory stores a program and data relatively small in volume such as a basic input and output system (BIOS) .

An image processing circuit 18 is connected to the arithmetic processing circuit 14. The arithmetic processing circuit 14 transmits predetermined image data to the image processing circuit 18. A display device 19 is connected to the image processing circuit 18. In the connection, a predetermined interface circuit (not shown) is connected to the image processing circuit 18. The image processing circuit 18 transmits an image signal to the display device 19 in accordance with the image data input. An image identified by the image signal is displayed on a screen of the display device 19. A flat panel display such as a liquid crystal display is used as the display device 19. Here, the arithmetic processing circuit 14, the storage device 16, and the image processing circuit 18 are provided as a computer device.

An input device 21 is connected to the arithmetic processing circuit 14. The input device 21 is provided with at least alphabet keys and a numerical keypad. Character information and numerical information is input to the arithmetic processing circuit 14 from the input device 21. The input device 21 can be formed of, for example, a keyboard. The combination of the computer device and the keyboard can be replaced with, for example, a smart phone, a cellular phone unit, or a tablet personal computer (PC).

2. Motion Analysis Model

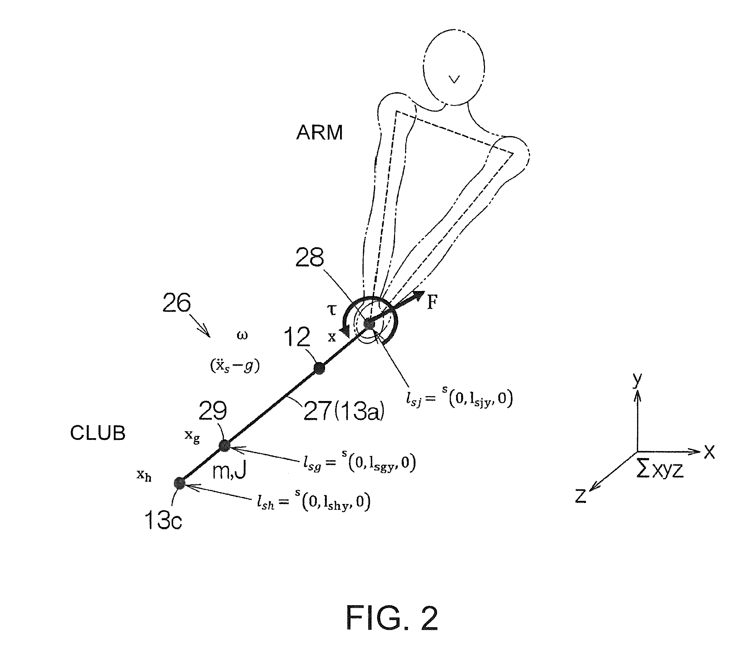

The arithmetic processing circuit 14 defines a virtual space. The virtual space is formed of a three-dimensional space. The three-dimensional space defines a real space. As shown in Fig. 2, the three-dimensional space has an absolute reference coordinate system (a global coordinate system) $\Sigma_{xyz}$. In the three-dimensional space, there is built a three-dimensional motion analysis model 26 in accordance with the absolute reference coordinate system $\Sigma_{xyz}$. Point constraint by a pivot point 28 (coordinate x) is applied to a rod 27 of the three-dimensional motion analysis model 26. The rod 27 three-dimensionally acts as a pendulum around the pivot point 28. The position of the pivot point 28 can be moved. Here, in accordance with the absolute reference coordinate system $\Sigma_{xyz}$, the position of the centroid 29 of the rod 27 is identified by the coordinate $x_g$, and the position of the club head 13c is identified by the coordinate $x_h$.
The three-dimensional motion analysis model 26 corresponds to what is obtained by modeling the golf club 13 at swing. The rod 27 as the pendulum projects the shaft 13a of the golf club 13. The pivot point 28 of the rod 27 projects the grip 13b. The inertial sensor 12 is fixed to the rod 27. In accordance with the absolute reference coordinate system $\Sigma_{xyz}$, the position of the inertial sensor 12 is identified by the coordinate $x_s$. The inertial sensor 12 outputs an acceleration signal and an angular velocity signal. In the acceleration signal, an acceleration after deduction of the influence of the gravitational acceleration g is identified, that is $(\ddot{X}_s - g)$. Further, in the angular velocity signal, angular velocities $\omega_1$, $\omega_2$ are identified.
Similarly, the arithmetic processing circuit 14 fixes a local coordinate system $\Sigma_s$ to the inertial sensor 12. The origin of the local coordinate system $\Sigma_s$ is set to the origin of the detection axis of the inertial sensor 12. The y axis of the local coordinate system $\Sigma_s$ coincides with the center of the shaft 13a. The x axis of the local coordinate system $\Sigma_s$ coincides with the hit ball direction identified by the orientation of the face (the hitting area). Therefore, in accordance with the local coordinate system $\Sigma_s$, the position $l_{sj}$ of the pivot point is identified by $(0, l_{sjy}, 0)$. Similarly, on the local coordinate system $\Sigma_s$, the position $l_{sg}$ of the centroid 29 is identified by $(0, l_{sgy}, 0)$, and the position $l_{sh}$ of the club head 13c is identified by $(0, l_{shy}, 0)$.

3. Configuration of Arithmetic Processing Circuit of First Embodiment

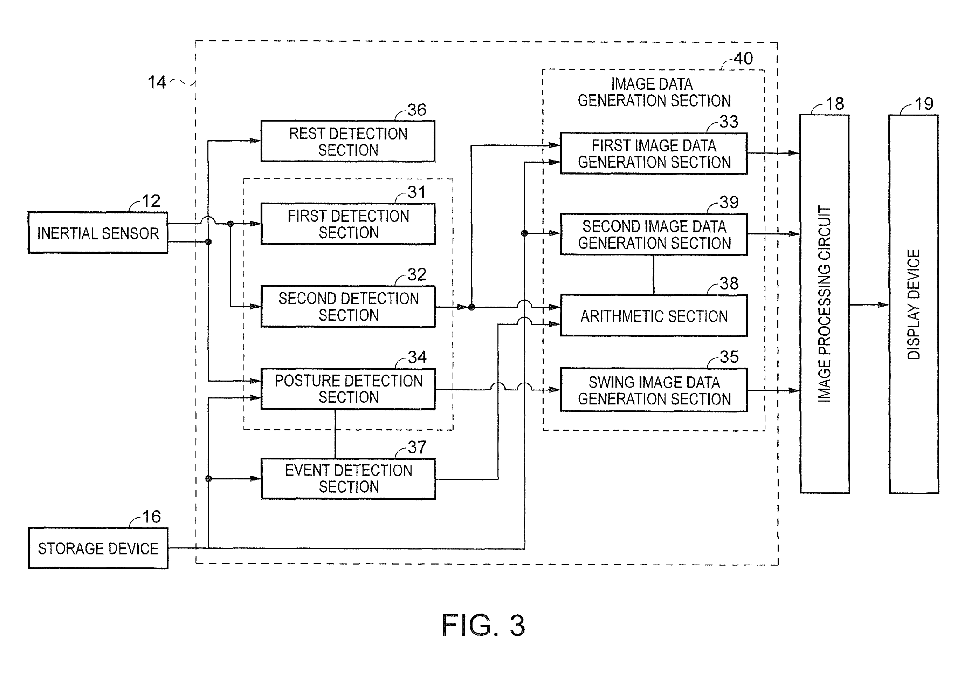

Fig. 3 schematically shows the configuration of the arithmetic processing circuit 14 according to the embodiment. The arithmetic processing circuit 14 is provided with a first detection section 31 and a second detection section 32. The first detection section 31 and the second detection section 32 are each connected to the inertial sensor 12. The first detection section 31 and the second detection section 32 are each supplied with an output from the inertial sensor 12.
The first detection section 31 detects an initial position of the grip 13b around an axis (coaxial with the shaft 13a) of the grip 13b based on the output of the inertial sensor 12. When performing the detection, the first detection section 31 obtains the angular velocity at address around a detection axis (here the y axis) parallel to the shaft 13a using the inertial sensor 12. The first detection section 31 sets the angular velocity thus obtained to an initial value. Since no angular velocity is generated around the y axis at address, when the angular velocity is settled at "0 (zero)," the angular position "0° (zero degree)" (=initial position) is set. The posture of the shaft 13a at address corresponds to a first state of the shaft portion, and corresponds to a resting state before starting the swing action.
The second detection section 32 detects relative rotational angles θn (n=1, ... , N) of the grip 13b around the axis from the initial position with the angular position of "0°" based on the output of the inertial sensor 12. When performing the detection, the second detection section 32 calculates a variation in the rotational angle per unit time. As shown in the following formula, the variations thus calculated are accumulated. Here, N represents the number of samples (the same shall apply hereinafter).

$$\theta_0 = 0$$

$$\theta_m = \sum_{n=1}^{m} \omega_n \cdot dt \quad (1 \le m < N)$$

As a result, the variation from the initial position is calculated at every time point obtained by accumulating the unit time. In such a manner as described above, the relative rotational angles θn of the grip 13b are identified in accordance with the time axis.
The arithmetic processing circuit 14 is provided with a first image data generation section 33. The first image data generation section 33 is connected to the second detection section 32. The first image data generation section 33 is supplied with the output from the second detection section 32. The first image data generation section 33 generates the image data. In the image data, an image for visually displaying the relative rotational angles θn is identified. The image data of the first image data generation section 33 identifies the image for displaying the variation in the relative rotational angle θn in accordance with the time axis. It is sufficient for such an image to be a graph in which, for example, the time axis is set to the horizontal axis, and the relative rotational angle θ is set to the vertical axis. Here, the image data can include comparative data (a comparative pattern) to be superimposed on the image. The comparative data represents a comparative example of the variation in the relative rotational angle θ. Such comparative data as described above can express a swing action of a professional, an advanced player, another test subject having the same skill as the test subject, or the like.

The arithmetic processing circuit 14 is provided with a posture detection section 34. The posture detection section 34 is connected to the inertial sensor 12. The posture detection section 34 is supplied with the output from the inertial sensor 12. Here, the output of the inertial sensor 12 includes the accelerations respectively detected along the three axes perpendicular to each other, and the angular velocities respectively detected around the three axes perpendicular to each other. The posture detection section 34 detects the posture of the golf club 13 based on the output of the inertial sensor 12. When performing the posture detection, the posture detection section 34 detects, for example, the positions of the grip 13b and the club head 13c in motion. When performing the position detection, the posture detection section 34 calculates the acceleration of the grip 13b in accordance with, for example, the following formula. In such a calculation of the acceleration as described above, the posture detection section 34 identifies the position $l_{sj}$ of the grip 13b in accordance with the local coordinate system $\Sigma_s$ unique to the inertial sensor 12. When identifying the position, the posture detection section 34 obtains the position information from the storage device 16. The storage device 16 stores the position $l_{sj}$ of the grip 13b in advance. The position $l_{sj}$ of the grip 13b can be designated via, for example, the input device 21.

$$\alpha_{sj} = \alpha_s + \dot{\omega}_s \times \ell_{sj} + \omega_s \times (\omega_s \times \ell_{sj}) \times g$$

The posture detection section 34 calculates the moving speed of the grip 13b based on the acceleration thus calculated. Here, integration processing is performed on the acceleration at a predetermined sampling interval dt in accordance with the following formula.

$$V_{sj}(0) = 0$$

$$V_{sj}(t) = \sum_{n=1}^{t} \alpha_{sj}(n) \cdot dt \quad (t = 1, ..., N)$$

Further, the posture detection section 34 calculates the position of the grip 13b based on the speed thus calculated. Here, integration processing is performed on the speed at the predetermined sampling interval dt in accordance with the following formula.

$$P_{sj}(t) = \sum_{n=1}^{t} V_{sj}(n) \cdot dt \quad (t = 1, ..., N)$$

Similarly, the posture detection section 34 detects the position of the club head 13c in accordance with the following formulas. When detecting the position, the posture detection section 34 identifies the position $l_{sh}$ of the club head 13c in accordance with the local coordinate system $\Sigma_s$ unique to the inertial sensor 12. When identifying the position, the posture detection section 34 obtains the position information from the storage device 16. The storage device 16

stores the position $l_{sh}$ of the club head 13c in advance. The position $l_{sh}$ of the club head 13c can be designated via, for example, the input device 21.

$$\alpha_{sh} = \alpha_s + \dot{\omega}_s \times \ell_{sh} + \omega_s \times (\omega_s \times \ell_{sh}) \times g$$

$$V_{sh}(0) = 0$$

$$V_{sh}(t) = \sum_{n=1}^{t} \alpha_{sh}(n) \cdot dt \quad (t = 1, ..., N)$$

$$P_{sh}(t) = \sum_{n=1}^{t} V_{sh}(n) \cdot dt \quad (t = 1, ..., N)$$

The arithmetic processing circuit 14 is provided with a swing image data generation section 35. The swing image data generation section 35 is connected to the posture detection section 34. The swing image data generation section 35 is supplied with the output of the posture detection section 34. The swing image data generation section 35 identifies a moving locus of the golf club 13 based on the position of the grip 13b and the position of the club head 13c calculated by the posture detection section 34. An image expressing the swing action is generated based on the moving locus thus identified. The image is output from the swing image data generation section 35 as the image data.

The arithmetic processing circuit 14 is provided with a rest detection section 36. The rest detection section 36 is connected to the inertial sensor 12. The rest detection section 36 is supplied with the output from the inertial sensor 12. Here, the output of the inertial sensor 12 includes the accelerations respectively detected along the three axes perpendicular to each other, and the angular velocities respectively detected around the three axes perpendicular to each other. The rest detection section 36 determines the resting state of the golf club 13 based on the output of the inertial sensor 12. When the output of the inertial sensor 12 falls below a threshold value, the rest detection section 36 determines the resting state of the golf club 13. The resting state of the golf club 13 represents the address in the swing action. It is sufficient for the threshold value to be set to a value with which an influence of the detection signal representing a minute vibration such as a body motion can be eliminated. When confirming the resting state for a predetermined period of time, the rest detection section 36 outputs a rest notification signal. The rest notification signal is transmitted to the first detection section 31, the second detection section 32, and the posture detection section 34. The first detection section 31 sets the initial position with the angular position of "0°" in response to the reception of the rest notification signal. The second detection section 32 starts the calculation of the relative rotational angle in response to the reception of the rest notification signal. The posture detection section 34 starts the detection of the posture of the golf club 13 in response to the reception of the rest notification signal.

Here, the rest detection section 36 can also refer to the tilt angle of the golf club 13 when determining the resting state. On this occasion, the rest detection section 36 calculates the tilt angle, namely the posture, of the golf club 13 based on the coordinate of the grip 13b and the coordinate of the club head 13c. The rest detection section 36 determines the posture of the golf club 13 at address based on the tilt angle thus calculated. Whether or not the tilt angle falls within a predetermined tilt angle range is determined. The rest detection section 36 starts the determination of the resting state of the golf club 13 after the posture of the golf club 13 at address is established.

The arithmetic processing circuit 14 is provided with an event detection section 37. The event detection section 37 is connected to the posture detection section 34. The event detection section 37 is supplied with the output of the posture detection section 34. The event detection section 37 identifies events in the swing action based on the posture of the golf club 13. For example, the event detection section 37 detects the axis (i.e., the axis of the shaft 13a) of the grip 13b disposed in parallel to the ground. In such a manner as described above, the halfway back position in a backswing can be identified. For example, the event detection section 37 can detect a change in acceleration at switching from the backswing to the downswing. In such a manner as described above, the top of the backswing is identified. When performing such detections, the event detection section 37 can also obtain a comparative reference value from the storage device 16.

The arithmetic processing circuit 14 is provided with an arithmetic section 38. The arithmetic section 38 is connected to the event detection section 37 and the second detection section 32. The arithmetic section 38 is supplied with the output of the event detection section 37 and the output of the second detection section 32. The arithmetic section 38 associates the respective events with the relative rotational angles $\theta n$. The events such as the halfway back position and the top position are associated with the specific relative rotational angles $\theta n$.

The arithmetic processing circuit 14 is provided with an image data generation section 40. The image data generation section 40 includes the first image data generation section 33, a second image data generation section 39, the arithmetic section 38, and the swing image data generation section 35. The image data generation section 40 is provided with the second image data generation section 39. The second image data generation section 39 is connected to the arithmetic section 38. The second image data generation section 39 is supplied with the output from the arithmetic section 38. The second image data generation section 39 generates the image data. In the image data, an image for visually displaying the relative rotational angles $\theta n$ is identified. The image data of the second image data generation section 39 identifies the image for displaying the relative rotational angles $\theta n$ together with the description of the events. It is sufficient for such an image to be, for example, a pseudo-pie chart in which the relative rotational angle $\theta$ is identified around the center point. Here, comparative data (a comparative pattern) to be superimposed on the image can be included. The comparative data represents a comparative example of the relative rotational angle $\theta$ event by event. Similarly to the above, it is sufficient for such comparative data to express a swing action of a professional, an advanced player, or another test subject.

The arithmetic processing circuit 14 is connected to the image processing circuit 18. Specifically, the image processing circuit 18 is connected to the first image data generation section 33, the second image data generation section 39, and the swing image data generation section 35 of the image data generation section 40. The image processing circuit 18 is supplied with the image data from the image data generation section 40. The image processing circuit 18 generates the image for displaying the variation in the relative rotational angle $\theta n$ in accordance with the time axis based on the output of the first image data generation section 33. Similarly, the image processing circuit 18 generates the image for displaying the relative rotational angles $\theta n$ together with the descriptions of the events based on the output of the second image data generation section 39. The image processing circuit 18 generates the image expressing the swing action based on the output of the swing image data generation section 35. Then, the image processing circuit 18 transmits the image data to be displayed to the display device 19 to display the image on the display device 19. The display device 19 includes a first display section and a second display section not shown. Specifically, the image processing circuit 18 transmits the image data for displaying the variation in the relative rotational angle $\theta n$ in accordance with the time axis to the display device 19 to display the image on the first display section. Here, the first display section displays the variation in the relative rotational angle $\theta n$ in accordance with the time axis. Further, the image processing circuit 18 transmits the image data for displaying the relative rotational angles $\theta n$ together with the descriptions of the events and the image data expressing the swing action separately or in a superimposed manner to the display device 19 to display the image on the second display section. Here, the second display section displays the image for displaying the relative rotational angles $\theta n$ together with the descriptions of the events and the image data expressing the swing action separately or in a superimposed manner.

4. Operation of Golf Swing Analysis Device

The operation of the golf swing analysis device 11 will briefly be explained. Firstly, the golf swing of a golfer is measured. Prior to the measurement, the necessary information is input from the input device 21 to the arithmetic processing circuit 14. Here, input of the position $I_{sj}$ of the pivot point 28 in accordance with the local coordinate system $\Sigma_s$, and a rotation matrix $R^0$ of the initial posture of the inertial sensor 12 is prompted. The information thus input is managed under, for example, specific identifiers. It is sufficient for the identifiers to identify the golfers.

Prior to the measurement, the inertial sensor 12 is attached to the shaft 13a of the golf club 13. The inertial sensor 12 is fixed to the golf club 13 so as to be unable to be displaced relatively to the golf club 13. Here, one of the detection axes of the inertial sensor 12 is adjusted to the axis of the shaft 13a. One of the detection axes of the inertial sensor 12 is adjusted to the hit ball direction identified by the orientation of the face (the hitting area).

Prior to the execution of the golf swing, the measurement by the inertial sensor 12 is started. At the beginning of the operation, the inertial sensor 12 is set to a predetermined position and a predetermined posture. The position and the posture correspond to those identified by the rotation matrix $R^0$ of the initial posture. The inertial sensor 12 continuously measures the acceleration and the angular velocity at predetermined sampling intervals. The sampling intervals define the resolution of the measurement. The detection signal of the inertial sensor 12 is fed to the arithmetic processing circuit 14 at real time. The arithmetic processing circuit 14 receives the signal for identifying the output of the inertial sensor 12.

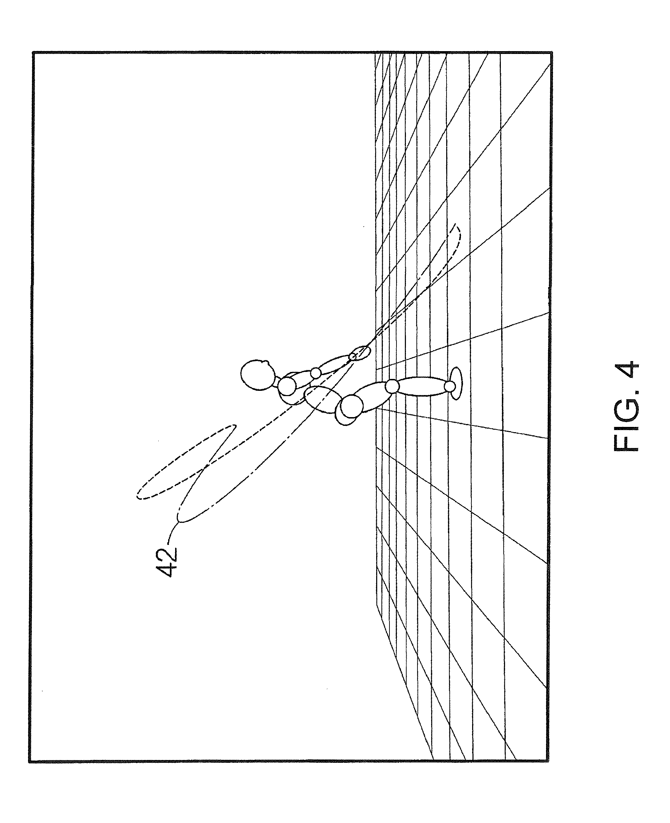

The golf swing starts with address, and then reaches follow-through and then finish via the take-back action, the halfway back position, the downswing from the top position, and the impact. The posture of the shaft 13a at the events such as the halfway back position or the top position corresponds to a second state of the shaft portion, and corresponds to an acting state after starting the swing action. The golf club 13 is swung. When the golf club 13 is swung, the posture of the golf club 13 varies in accordance with the time axis. The inertial sensor 12 outputs the detection signal in accordance with the posture of the golf club 13. On this occasion, the posture detection section 34 calculates the posture of the golf club 13 in accordance with the time axis based on the detection signal at the swing action. The swing image data generation section 35 identifies the moving locus of the golf club 13 at the swing action based on the posture of the golf club 13 thus calculated. The swing image data generation section 35 generates the three-dimensional image data (e.g., a polygon data) visually expressing the swing action. A drawing section 41 draws an image for visually identifying the moving locus 42 of the golf club 13 based on the three-dimensional image data as shown in, for example, Fig. 4. In such a manner as described above, the swing action is visually expressed with the image. The drawing data is transmitted to the image processing circuit 18, and the image is reflected on a screen of the display device 19 in accordance with the drawing data.

At the measurement of the golf swing, the test subject firstly takes the posture for address. At address, the test subject reproduces the posture at the moment of an impact. As a result, the posture at the moment of the impact is extracted from a contiguous action of "golf swing." On this occasion, the golf club 13 is held in the resting posture. The rest detection section 36 detects the resting state of the golf club 13. The rest detection section 36 outputs the rest notification signal. The first detection section 31 sets the initial position with the angular position of "0°" in response to the reception of the rest notification signal. The second detection section 32 starts the calculation of the relative rotational angle in response to the reception of the rest notification signal. The posture detection section 34 starts the detection of the posture of the golf club 13 in response to the reception of the rest notification signal.

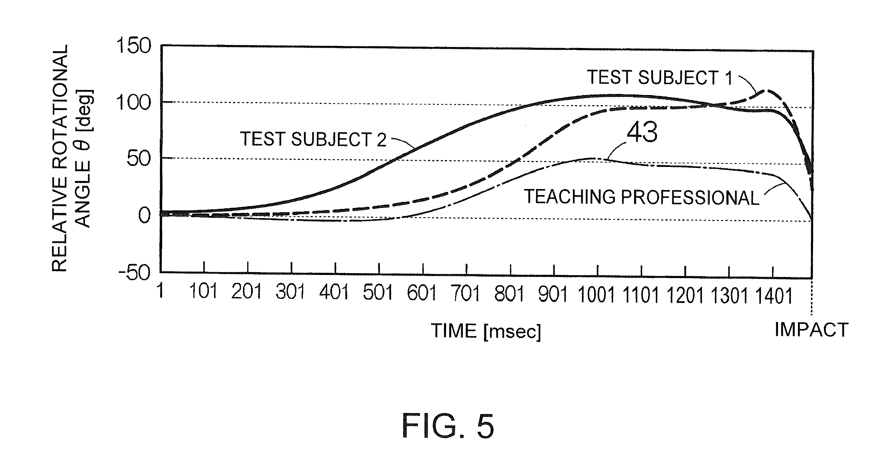

During the swing action starting with address, the second detection section 32 detects the relative rotational angles $\theta n$ at predetermined unit time intervals. The relative rotational angles $\theta n$ of the grip 13b are identified in accordance with the time axis. The output signal for identifying the relative rotational angles $\theta n$ is transmitted to the first image data generation section 33. The first image data generation section 33 generates the two-dimensional image data for identifying the image for displaying the variation in the relative rotational angle $\theta n$ in accordance with the time axis. The drawing section 41 draws the image for displaying the variation in the relative rotational angle $\theta$ in accordance with the time axis based on the two-dimensional image data thus generated as shown in, for example, Fig. 5. In the image, the comparative data 43 of a teaching professional is drawn at the same time. Besides the above, it is also possible for the graph of the relative rotational angle $\theta$ to be reflected on the screen together with the image of the swing action shown in Fig. 5.

The event detection section 37 identifies events in the swing action based on the output of the posture detection section 34. Here, the event detection section 37 identifies the halfway back position and the top position in the backswing. For example, the event detection section 37 associates the event such as the halfway back position or the top position with the elapsed time from the address. The halfway back position and the top position thus identified are output together with time stamps as the data.

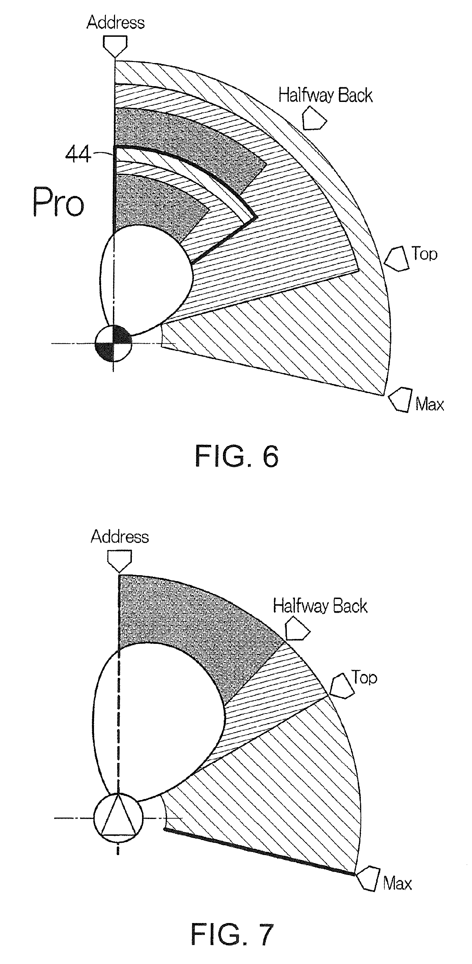

The output of the event detection section 37 is transmitted to the arithmetic section 38. To the arithmetic section 38, there is transmitted an output signal for identifying the relative rotational angles $\theta n$ from the second detection section 32. The arithmetic section 38 associates the event such as the halfway back position or the top position with the specific relative rotational angle $\theta$. The data of the relative rotational angle $\theta$ associated with the events is transmitted to the second image data generation section 39. The second image data generation section 39 generates the two-dimensional image data for identifying the image for displaying the relative rotational angle $\theta$ together with the descriptions of the events. On this occasion, the second image data generation section 39 adds the description of "Address" to the initial position of the relative rotational angle $\theta$. The second image data generation section 39 adds the description of "Halfway Back" to the position of the relative rotational angle $\theta$ corresponding to the halfway back position. The second image data generation section 39 adds the description of "Top" to the position of the relative rotational angle $\theta$ corresponding to the top position. The second image data generation section 39 adds the description of "Max" to the position where the relative rotational angle $\theta$ shows the maximum value. The drawing section 41 draws the image including "Address," "Halfway Back," "Top," and "Max" associated with the relative rotational angle $\theta$ based on the two-dimensional image data thus generated as shown in, for example, Fig. 6. In this pseudo-pie chart, the central angle of "0°" is indicated by "Address," and the relative rotational angle $\theta$ is displayed clockwise based on that position. One revolution started from "Address" and then returned to "Address" again corresponds to 360°. In the image, the comparative data 44 of a teaching professional is drawn at the same time. Besides the above, as shown in Fig. 7, it is also possible to draw only the relative rotational angle $\theta$ of the test subject as the pseudo-pie chart with the comparative data omitted. Besides the above, it is also possible for the graph of the relative rotational angles $\theta n$ and the events to be reflected on the screen together with the image of the swing action shown in Fig. 5.

At the beginning of the swing, the test subject preliminarily determines the posture of the golf club 13 at impact. The swing action including the impact is newly executed from here. In the swing action, the relative rotational angle of the grip 13b is detected around the axis of the grip 13b. Based on the output of the first image data generation section 33 and the output of the second image data generation section 39, the relative rotational angle θ is visually displayed on the screen of the display device 19. In such a manner as described above, the rotation of the grip 13b is presented to the test subject as the rotation around the axis. It is known that such a rotation of the grip 13b affects the direction of the hit ball after the impact. The test subject can improve the form of the swing in accordance with the rotation of the grip 13b thus presented.

In particular, according to the output of the first image data generation section 33, since the variation in the relative angular position is visually presented in accordance with the time axis, the test subject can intuitively recognize the degree of the variation and the speed of the variation. It is possible for the test subject to improve the form of the swing in accordance with such a recognition. On the other hand, according to the output of the second image data generation section 39, since the events such as address, the halfway back position, and the top position are visually presented in accordance with the angle of the relative angular position, it is possible for the test subject to intuitively recognize the relationship between the relative angular positions and the events. It is possible for the test subject to improve the form of the swing based on such a recognition. Since the axis of the grip 13b is oriented in parallel to the ground at the halfway back position, the event detection section 37 can identify the angular position corresponding to the halfway back position. It is possible for the test subject to improve the form of the swing based on such an index.

Moreover, in the image corresponding to the time axis and the image of the pseudo-pie chart, the swing action of a professional or an advanced player is expressed as the comparative data. In such a manner, the variation in the relative rotational angle θ of the test subject is compared with the variation in the relative rotational angle of a professional or an advanced player, and the relative rotational angle θ of the test subject is compared with the relative rotational angle of a professional or an advanced player event by event. It is possible for the test subject to improve the form of the swing in accordance with the comparison.

In the inertial sensor 12, if at least the angular velocity around the axis of the shaft portion of the sporting equipment is detected, the relative rotational angle of the grip 13b is detected. If the accelerations are respectively detected along the three axes perpendicular to each other in the inertial sensor 12, and the angular velocities are respectively detected around the three axes perpendicular to each other in the inertial sensor 12, the posture of the golf club 13 is detected using a single inertial sensor 12.

It should be noted that in the embodiment described hereinabove, each of the functional blocks of the arithmetic processing circuit 14 is realized in accordance with the execution of the golf swing analysis software program 17. It should also be noted that each of the functional blocks can also be realized without resort to the software processing.

Although in the embodiment described above, there is described the relative rotational angle in the golf swing between the state of the shaft 13a or the face angle of the club head 13c of the golf club 13 at address, and the shaft 13a or the face angle of the golf club 13 at a certain timing in the golf swing, it is also possible to calculate a relative rotational angle of the shaft 13a or the face angle of the golf club 13 between certain two points of timing in the swing. Further, it is also possible to obtain a relative rotational angle around an axis other than the axis of the shaft portion of the sporting equipment in conjunction with the detection of the rotational angle around the axis of the shaft portion, and then display the relative rotational angle together with the rotational angle around the axis of the shaft portion.

Second Embodiment

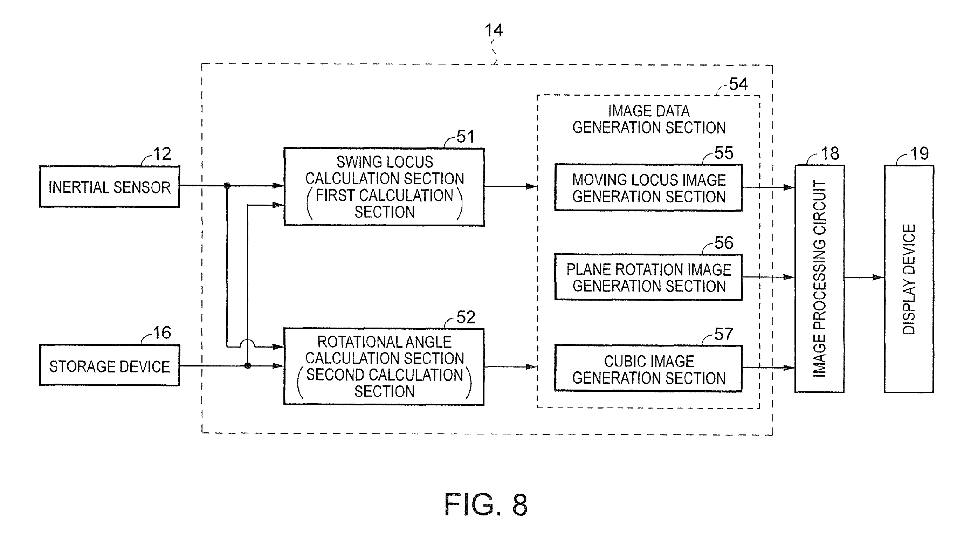

Hereinafter, a second embodiment of the invention will be explained with reference to Figs. 8, 9, and 10. It should be noted that in the following explanation, "1. Configuration of Golf Swing Analysis Device" and "2. Motion Analysis Model," which have substantially the same configurations as those of the first embodiment described above, will be denoted with the same reference symbols, and the explanation thereof will be omitted.

3. Configuration of Arithmetic Processing Circuit of Second Embodiment

Fig. 8 schematically shows the configuration of the arithmetic processing circuit 14 according to the embodiment. The arithmetic processing circuit 14 is provided with a swing locus calculation section 51 as a first calculation section and a rotational angle calculation section 52 as a second calculation section. The swing locus calculation section 51 is connected to the inertial sensor 12. The swing locus calculation section 51 is supplied with an output signal from the inertial sensor 12. Here, the output of the inertial sensor 12 includes the accelerations respectively detected along the three axes perpendicular to each other, and the angular velocities respectively detected around the three axes perpendicular to each other. The swing locus calculation section 51 detects the position and the posture of the golf club 13 based on the output of the inertial sensor 12. The swing locus calculation section 51 detects, for example, the positions of the grip 13b and the club head 13c in motion. When performing the detection, the swing locus calculation section 51 calculates the acceleration of the grip 13b in accordance with, for example, Formula 3 described above. In such a calculation of the acceleration as described above, the swing locus calculation section 51 identifies the position $l_{sj}$ of the grip 13b in accordance with the local coordinate system $\Sigma_s$ unique to the inertial sensor 12. When identifying the position, the swing locus calculation section 51 obtains the position information from the storage device 16. The storage device 16 stores the position $I_{sj}$ of the grip 13b in advance. The position $I_{sj}$ of the grip 13b can be designated via, for example, the input device 21.

The swing locus calculation section 51 calculates the moving speed of the grip 13b based on the acceleration thus calculated. Here, integration processing is performed on the acceleration at a predetermined sampling interval dt in accordance with Formula 4 described above. N represents the number of samples (the same shall apply hereinafter).

Further, the swing locus calculation section 51 calculates the position of the grip 13b based on the speed thus calculated. Here, integration processing is performed on the speed at a predetermined sampling interval dt in accordance with Formula 5 described above.

The swing locus calculation section 51 identifies the position (or the position of the grip 13b) of the local coordinate system $\Sigma_s$ in the virtual three-dimensional space in advance. When the displacement of the local coordinate system $\Sigma_s$ or the displacement of the grip 13b is converted into the coordinate system in the virtual three-dimensional space, the position of the golf club 13 is identified.

Similarly, the swing locus calculation section 51 detects the position of the club head 13c in accordance with Formulas 6, 7, and 8 described above. When detecting the position, the swing locus calculation section 51 identifies the position $I_{sh}$ of the club head 13c in accordance with the local coordinate system $\Sigma_s$ unique to the inertial sensor 12. When identifying the position, the swing locus calculation section 51 obtains the position information from the storage device 16. The storage device 16 stores the position $I_{sh}$ of the club head 13c in advance. The position $I_{sh}$ of the club head 13c can be designated via, for example, the input device 21.

The rotational angle calculation section 52 is connected to the inertial sensor 12. The rotational angle calculation section 52 is supplied with the output from the inertial sensor 12. The rotational angle calculation section 52 detects rotational angles θn (n=1, ..., N) of the grip 13b around the axis from the initial position with the angular position of "0°" based on the output of the inertial sensor 12. When performing the detection, the rotational angle calculation section 52 calculates a variation in the rotational angle per unit time. As shown in Formula 9 below, the variations thus calculated are accumulated.

$$\theta_0 = 0$$

$$\theta_m = \sum_{n=1}^{m} \omega_n \cdot dt \quad (1 \leq m < N)$$

As a result, the variation from the initial position is calculated at every time point obtained by accumulating the unit time. In such a manner as described above, the rotational angles θn of the grip 13b is identified in accordance with the time axis.

When detecting the rotational angles θn, the rotational angle calculation section 52 detects the initial position of the grip 13b around the axis (coaxial with the shaft 13a) of the grip 13b based on the output of the inertial sensor 12. When performing the detection, the rotational angle calculation section 52 obtains the angular velocity at address around a detection axis (here the y axis) parallel to the shaft 13a using the inertial sensor 12. The rotational angle calculation section 52 sets the angular velocity thus obtained to an initial value. Since no angular velocity is generated around the y axis at address, when the angular velocity is settled at "0 (zero)," the angular position "0° (zero degree)" (=initial position) is set.

Although not shown in the drawings, the arithmetic processing circuit 14 can also be provided with a synchronization section for synchronizing the calculation result from the swing locus calculation section 51 and the calculation result from the rotational angle calculation section 52 with each other. The synchronization section is connected to the swing locus calculation section 51 and the rotational angle calculation section 52. The synchronization section is supplied with output signals from the swing locus calculation section 51 and the rotational angle calculation section 52. The synchronization section synchronizes the rotational angles θn of the grip 13b calculated by the rotational angle calculation section 52 with the position and the posture of the golf club 13 calculated by the swing locus calculation section 51. As a result, the angular position of the grip 13b is identified around the axis of the grip 13b at each position of the golf club 13. When performing such identification as described above, it is sufficient that the position of the golf club 13 and the rotational angle of the grip 13b calculated based on the acceleration and the angular velocity output from the inertial sensor 12 at the same time point are connected to each other one-on-one.

The arithmetic processing circuit 14 is provided with an image data generation section 54. The image data generation section 54 is connected to the swing locus calculation section 51 and the rotational angle calculation section 52. The image data generation section 54 is supplied with the output signals from the swing locus calculation section 51 and the rotational angle calculation section 52. The image data generation section 54 is provided with a moving locus image generation section 55, a plane rotation image generation section 56, and a cubic image generation section 57. The moving locus image generation section 55 generates an image for visually displaying the moving locus of the golf club 13 based on the position and the posture of the golf club 13. The plane rotation image generation section 56 generates an image (marking) for displaying a plane, which is defined on the golf club 13, and rotates around the axis of the grip 13b, namely the face. The orientation of the face at the same time point is identified for each position of the moving locus. The cubic image generation section 57 generates an image of a cube having ridge lines parallel to the axis of the grip 13b. In the cube, there is defined a plane expanding in parallel to the axis of the grip 13b and having a contour (here a square contour) of a certain geometric configuration. The plane of the cube changes the orientation around the axis of the grip 13b in accordance with the variation in the rotational angle $\theta$n of the grip 13b. The images at the same time point are associated with each other, and output from the image data generation section 54 as single image data. It should be noted that the marking can also be achieved by a curved surface or a three-dimensional shape such as a sphere other than the cube, besides the plane and the cube.

The arithmetic processing circuit 14 is connected to the image processing circuit 18. Specifically, the image processing circuit 18 is connected to the moving locus image generation section 55, the plane rotation image generation section 56, and the cubic image generation section 57 of the image data generation section 54. The image processing circuit 18 is supplied with the image data from the image data generation section 54. The image processing circuit 18 draws the image for visually displaying the moving locus of the golf club 13 based on the output signal of the moving locus image generation section 55. The image processing circuit 18 superimposes the image of the face output from the plane rotation image generation section 56 and the image of the cube output from the cubic image generation section 57 on the image of the moving locus of the golf club 13 for each of the positions. As a result, there is generated an image for performing visual display while associating the rotational angle of the face and the rotational angle of the cube with the moving locus of the golf club 13 in the virtual three-dimensional space. Then, the image processing circuit 18 transmits the image data to be displayed to the display device 19 to display the image on a third display section (not shown) of the display device 19. Here, the display device 19 draws an animation with the image data contiguous in accordance with the time axis.

4. Operation of Golf Swing Analysis Device

The operation of the golf swing analysis device 11 will briefly be explained. The measurement of the golf swing of the golfer is substantially the same as in the first embodiment, and therefore, the explanation thereof will be omitted.

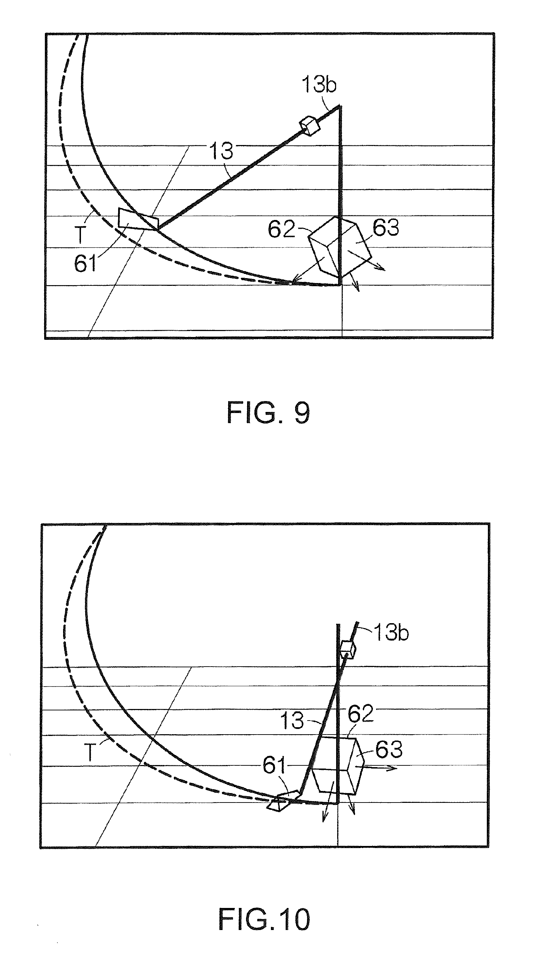

The golf swing starts with address, and then reaches follow-through and then finish via a take-back action, the halfway back position, the downswing from the top position, and the impact. When the golf club 13 is swung, the posture of the golf club 13 varies in accordance with the time axis. The inertial sensor 12 outputs the detection signal in accordance with the posture of the golf club 13. On this occasion, the swing locus calculation section 51 detects the position and the posture of the golf club 13 based on the output of the inertial sensor 12. The rotational angle calculation section 52 detects the angular position of the grip 13b around the axis of the grip 13b based on the output of the inertial sensor 12. The image data generation section 54 generates the three-dimensional image data (e.g., the polygon data) for identifying the image of the face and the image of the cube in association with the moving locus of the golf club 13 for each of the time points. The drawing section 58 draws the image of the face 61 and the image of the cube 62 in association with the moving locus T of the golf club 13 based on the three-dimensional image data as shown in, for example, Figs. 9 and 10. The rotation of the face 61 and the rotation of the cube 62 represent the rotation (roll) of the wrist. In such a manner as described above, the swing action and the roll of the wrist are visually expressed with the image. The drawing data is transmitted to the image processing circuit 18, and the image is reflected on a screen (the third display section) of the display device 19 in accordance with the drawing data. As a result, the motion of the wrist is visually presented in association with the swing action. It is possible for the test subject to improve the form of the swing in accordance with such a motion of the wrist. Moreover, the drawing section 58 draws the animation with the image data contiguous in accordance with the time axis. In such a manner as described above, the swing action is reproduced on the screen together with the motion of the wrist. It is possible for the test subject to improve the form of the swing over the observation of such a reproduction. Since the shaft of the sporting equipment has a rod-like shape, even if the rotation around the axis of the shaft is displayed, it is difficult for the test subject to figure out the amount of the rotation. Therefore, by displaying the marking representing the variation in the rotational angle generated around the axis of the shaft portion of the sporting equipment together with the moving locus of the sporting equipment, it is possible to display the state of the roll of the wrist and the variation in the angle of the hitting area so as to be easily understood by the test subject.

At the measurement of the golf swing, the test subject firstly takes the posture for address. At address, the test subject reproduces the posture at the moment of the impact. As a result, the posture at the moment of the impact is extracted from a contiguous action of "golf swing. " On this occasion, the golf club 13 is held in the resting posture. The rotational angle calculation section 52 sets the initial position with the angular position of "0°," and then starts the calculation of the rotational angle.

In the image, the plane 63 of the cube 62 changes the orientation in accordance with the rotation of the grip 13b. The rotation of the grip 13b, namely the rotation of the wrist, is expressed by the rotation of the plane 63. In such a manner as described above, the test subject can clearly understand the rotation of the wrist from the image. It is possible for the test subject to improve the form of the swing in accordance with such understanding. In particular, the cube 62 reflects the three axes perpendicular to each other of the grip 13b. As a result, the test subject can clearly recognize ideally the motion of the wrist.

When presenting the swing action, the face 61 is identified in the image. In such a manner as described above, the rotation of the wrist can be expressed by the golf club 13 itself. The test subject can visually confirm the motion of the golf club 13. It is possible for the test subject to improve the form of the swing over such confirmation.

The inertial sensor 12 detects the accelerations respectively along the three axes perpendicular to each other, and detects the angular velocities respectively around the three axes perpendicular to each other. In such a manner as described above, the position and the posture of the golf club 13 and the rotational angle of the grip 13b are detected by the single inertial sensor 12. Moreover, the inertial sensor 12 has the detection axis parallel to the axis of the grip 13b, and detects the angular velocity around the detection axis. If one of the detection axes of the inertial sensor 12 is adjusted to the axis of the grip 13b in such a manner as described above, the calculation process is simplified when detecting the rotational angle around the axis.

It should be noted that in the embodiment described hereinabove, each of the functional blocks of the arithmetic processing circuit 14 is realized in accordance with the execution of the golf swing analysis software program 17. It should also be noted that each of the functional blocks can also be realized without resort to the software processing. Besides the above, the golf swing analysis device 11 can also be applied to the swing analysis of sporting equipment (e.g., a tennis racket, a table-tennis racket, and a baseball bat) held by hand and then swung. Further, the swing locus calculation section 51 and the rotational angle calculation section 52 shown in Fig. 8 are described separately, but can also be combined to be a single calculation section.

Although the first and second embodiments are hereinabove explained in detail, it should easily be understood by those skilled in the art that various modifications not substantially departing from the novel matters and the effects of the invention can be made. Therefore, such modified examples are all included in the scope of the invention. For example, a term described at least once with a different term having a broader sense or the same meaning in the specification or the accompanying drawings can be replaced with the different term in any part of the specification or the accompanying drawings. Further, the configurations and the operations of the inertial sensor 12, the golf club 13, the arithmetic processing circuit 14, the three-dimensional motion analysis model 26, the swing locus calculation section 51, the rotational angle calculation section 52 and so on are not limited to those explained in the embodiments, but can variously be modified. Further, the invention can also be applied to the sports using the swing action such as tennis or baseball beside the golf.

**Claims**

1. A motion analysis device comprising:

   a first detection section adapted to detect a first state of a shaft portion of sporting equipment using an output of an inertial sensor; and
   a second detection section adapted to detect a second state of the shaft portion of the sporting equipment using the output of the inertial sensor to detect a relative rotational angle of the shaft portion having varied around an axis of the shaft portion from the first state.

2. The motion analysis device according to Claim 1, wherein
   the first state is a resting state before starting a swing action, and the second state is an acting state after starting the swing action.

3. The motion analysis device according to Claim 1, wherein
   the first detection section identifies an orientation of a hitting area of the sporting equipment in the first state, and
   the second detection section identifies the orientation of the hitting area of the sporting equipment in the second state.

4. The motion analysis device according to Claim 1, further comprising:

14

EP 2 824 650 A1

a first display section adapted to display the relative rotational angle.

5. The motion analysis device according to Claim 4, wherein
the first display section displays a variation in the relative rotational angle in accordance with time in a swing action of the sporting equipment.

6. The motion analysis device according to Claim 4, wherein
the first display section additionally displays comparative data of the variation in the relative rotational angle.

7. The motion analysis device according to Claim 1, further comprising:

an event detection section adapted to identify an event in a swing action using the output of the inertial sensor; and
an arithmetic section adapted to associate the relative rotational angle with the event.

8. The motion analysis device according to Claim 7, further comprising:

a second display section adapted to display the relative rotational angle together with a description of the event.

9. The motion analysis device according to Claim 7, wherein
the second display section additionally displays comparative data of the relative rotational angle corresponding to the event.

10. A motion analysis device comprising:

a first calculation section adapted to calculate a moving locus of sporting equipment in a swing using an output of an inertial sensor; and
a second calculation section adapted to calculate a rotational angle generated around an axis of a shaft portion of the sporting equipment using the output of the inertial sensor,
wherein the rotational angle obtained by the second calculation section is associated with the moving locus of the sporting equipment obtained by the first calculation section.

11. The motion analysis device according to Claim 10, wherein
a calculation result of the second calculation section is synchronized with a calculation result of the first calculation section.

12. The motion analysis device according to Claim 10, further comprising:

a third display section adapted to display data having the rotational angle obtained by the second calculation section associated with the moving locus of the sporting equipment obtained by the first calculation section.

13. The motion analysis device according to Claim 12, wherein
the third display section displays a marking together with the moving locus of the sporting equipment, and
the marking changes an orientation in accordance with a variation in the rotational angle generated around the shaft portion of the sporting equipment calculated by the second calculation section.

14. The motion analysis device according to Claim 13, wherein
the marking is provided with a plane adapted to change an orientation in accordance with a movement of a hitting area of the sporting equipment.

15. The motion analysis device according to Claim 13, wherein
the marking is displayed as a three-dimensional shape.

16. The motion analysis device according to Claim 12, wherein
the third display section displays a plane rotating around an axis of the shaft portion of the sporting equipment on the moving locus of the sporting equipment.

17. The motion analysis device according to Claim 1, wherein
the inertial sensor is provided with a detection axis parallel to the axis of the shaft portion of the sporting equipment,

15

and detects an angular velocity generated around the detection axis.

18. A motion analysis device comprising:

a unit configured to calculate a moving locus of sporting equipment in a swing using an output of an inertial sensor; and
a unit configured to calculate a rotational angle generated around an axis of a shaft portion of the sporting equipment using the output of the inertial sensor,
wherein the rotational angle is associated with the moving locus of the sporting equipment.

FIG. 1

FIG. 2

EP 2 824 650 A1

FIG. 3

FIG. 4

FIG. 5

EP 2 824 650 A1

FIG. 6

FIG. 7

FIG. 8

14

12 INERTIAL SENSOR

16 STORAGE DEVICE

51 SWING LOCUS CALCULATION SECTION (FIRST CALCULATION SECTION)

52 ROTATIONAL ANGLE CALCULATION SECTION (SECOND CALCULATION SECTION)

54 IMAGE DATA GENERATION SECTION

55 MOVING LOCUS IMAGE GENERATION SECTION

56 PLANE ROTATION IMAGE GENERATION SECTION

57 CUBIC IMAGE GENERATION SECTION

18 IMAGE PROCESSING CIRCUIT

19 DISPLAY DEVICE

FIG. 9

FIG. 10

Europäisches
Patentamt

European
Patent Office

Office européen
des brevets

# EUROPEAN SEARCH REPORT

Application Number

EP 14 17 2934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 008333 A1 (WIELSCH UWE [DE] FRONTIER SEMICONDUCTOR [US]) 6 September 2007 (2007-09-06) * paragraphs [0019] - [0107] * | 1-18 | INV. G09B19/00 A63B69/36 |
| X | US 2013/065711 A1 (UEDA MASAHIKO [JP] ET AL) 14 March 2013 (2013-03-14) * paragraphs [0052] - [0204] * | 1-18 | |
| X | KING ET AL: "Wireless MEMS inertial sensor system for golf swing dynamics", SENSORS AND ACTUATORS A, ELSEVIER SEQUOIA S.A., LAUSANNE, CH, vol. 141, no. 2, 2 February 2008 (2008-02-02), pages 619-630, XP022452409, ISSN: 0924-4247, DOI: 10.1016/J.SNA.2007.08.028 * the whole document * | 1-18 | |
| X | US 2005/288119 A1 (WANG HONGCHUAN [US] ET AL) 29 December 2005 (2005-12-29) * paragraphs [0010] - [0063] * | 1-18 | TECHNICAL FIELDS SEARCHED (IPC) G09B A63B |
| X | JP 2006 109988 A (YOKOHAMA RUBBER CO LTD) 27 April 2006 (2006-04-27) * abstract * | 1-18 | |
| X | US 7 871 333 B1 (DAVENPORT ROGER [US] ET AL) 18 January 2011 (2011-01-18) * column 1, line 60 - column 20, line 48 * | 1-18 | |
| X | KR 2010 0020131 A (KOO EY JUNG [KR]) 22 February 2010 (2010-02-22) * abstract * | 1-18 | |

The present search report has been drawn up for all claims

| Place of search | Date of completion of the search | Examiner |
|---|---|---|
| Munich | 26 November 2014 | Díaz de Lezana, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Patent document cited in search report | Publication date | Patent family member(s) | Publication date |
|---|---|---|---|
| DE 102006008333 A1 | 06-09-2007 | DE 102006008333 A1<br>WO 2007096069 A2 | 06-09-2007<br>30-08-2007 |
| US 2013065711 A1 | 14-03-2013 | CN 103071280 A<br>JP 2013056074 A<br>KR 20130028668 A<br>US 2013065711 A1 | 01-05-2013<br>28-03-2013<br>19-03-2013<br>14-03-2013 |
| US 2005288119 A1 | 29-12-2005 | US 2005288119 A1<br>WO 2006004908 A2 | 29-12-2005<br>12-01-2006 |
| JP 2006109988 A | 27-04-2006 | JP 4622441 B2<br>JP 2006109988 A | 02-02-2011<br>27-04-2006 |
| US 7871333 B1 | 18-01-2011 | NONE | |
| KR 20100020131 A | 22-02-2010 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008073210 A